# DEMANDE DE BREVET EUROPEEN

(11) **EP 4 755 627 A1**
(43) Date de publication de la demande: **10.06.2026**
(21) Numéro de dépôt: 24218403.4
(22) Date de dépôt: 09.12.2024
(51) Int. Cl.: B32B 18/00, C04B 35/117, C04B 35/488, C04B 35/56, C04B 35/58, C04B 35/587, C04B 35/593, C04B 35/645

(54) **COMPOSANT EN CÉRAMIQUE MULTICOLORE ET SON PROCÉDÉ DE FABRICATION**

(71) Demandeur: Comadur S.A., 2400 Le Locle (CH)
(72) Inventeur: ACTIS-DATTA, Arnaud, 2854 Bassecourt (CH); RETROUVEY, Sébastien, 39380 Chissey sur Loue (FR); OIAN, Nicolas, 1971 Grimisuat (CH); VUILLE, Pierry, 2338 Les Emibois (CH)
(74) Mandataire: ICB SA

(57) **Abrégé**

L'invention concerne un composant en céramique multicolore et son procédé de fabrication.

## Description

### DOMAINE TECHNIQUE

La présente invention se rapporte à un composant en céramique. Elle se rapporte plus particulièrement à un composant horloger, réalisé par frittage SPS de matières céramiques de couleurs pour former un composant horloger monobloc multicolore.

### ART ANTERIEUR

Les composants horlogers en céramique ou en cermet sont généralement obtenus par un procédé de mise en forme d'injection ou un procédé de pressage uniaxial ou isostatique d'une matière, suivi d'un frittage. Ces composants présentent souvent un décor, tel que des index et des chiffres pour un cadran ou une lunette, qui est de couleur distincte du reste du composant, ou tout simplement une décoration bicolore dans la masse. Les éléments du décor sur les lunettes sont généralement rapportés par incrustation ou remplissage sur l'ébauche issue du frittage. Cet assemblage mécanique entre l'ébauche et les éléments du décor peut se révéler coûteux et compliqué à mettre en oeuvre.

Une alternative à cet assemblage mécanique consiste à réaliser une ébauche par injection de matières de couleurs différentes, la couleur destinée à former le décor étant révélée après usinage. Cependant, fabriquer des composants en céramique ou en cermet avec des couleurs différentes s'avère complexe. On connait par exemple le document JP59910502 qui décrit un moulage par injection de poudres céramiques associées à un liant organique. Un tel procédé a l'inconvénient d'être complexe à mettre en oeuvre puisqu'il comporte de nombreuses étapes, notamment la préparation de la poudre comprenant un liant nécessitant une étape de déliantage, ainsi qu'un ou plusieurs étapes supplémentaires pour l'obtention de la couleur finale désirée.

On connait également du document EP 2 965 713 un procédé pour obtenir une matière céramique avec un dégradé de couleur et former une prothèse dentaire. Cependant, un tel procédé utilise un pressage isostatique qui est généralement long et contraignant.

### RESUME DE L'INVENTION

La présente invention a pour objet de pallier aux inconvénients précités en proposant un nouveau procédé de fabrication permettant d'obtenir un composant en céramique multicolore.

A cet effet, la présente invention se rapporte à un procédé de fabrication d'un composant en céramique multicolore.

Plus précisément, le procédé de fabrication du composant multicolore selon l'invention comporte les étapes suivantes :
- préparer plusieurs poudres céramique ou cermets, les poudres céramique se distinguant entre elles par leur composition et/ou couleur, les poudres comportant uniquement des éléments céramiques, des carbures, des nitrures, des oxydes ou un mélange de ces éléments ;
- mettre à disposition un moule ;
- déposer les poudres dans le moule ;
- effectuer un cycle frittage de type flash ou SPS, opéré à une température de frittage comprise entre 600°C et 1800°C et une pression de frittage comprise entre 5N/mm2 et 250N/mm2, pendant un temps de cycle complet compris entre 10 min et 180 min, de sorte à former un composant en céramique monobloc, multicolore ;
- démouler le composant multicolore obtenu ;
- effectuer une finition du composant multicolore en céramique.

La présente invention se rapporte également au composant en céramique multicolore issu du procédé de fabrication.

Conformément à d'autres variantes avantageuses de l'invention :
- l'étape de démoulage est suivie par un traitement thermique type recuit entre 550 et 1100°C, et entre 30 minutes et 8 heures palier sous air ou gaz réactif ;
- les poudres de céramique ou cermet sont choisies parmi : une poudre à base de l'oxyde de zirconium, d'un oxyde d'aluminium, d'un nitrure de titane, d'un nitrure de silicium, d'un carbure de titane, d'un carbure de tungstène ou d'un mélange d'au moins deux de ces poudres ;
- une ou plusieurs poudres céramique comprennent un ou plusieurs pigments distincts donnant une couleur différente à la céramique ;
- le pigment est un sulfure de cérium ;
- le pigment est un oxyde métallique, un perovskite ou un spinelle ;
- le pigment est choisi parmi un oxyde de chrome, un oxyde de cobalt, un oxyde de fer, un oxyde de titane, un oxyde de manganèse, un oxyde de molybdène, un oxyde de cérium, un oxyde de vanadium, un oxyde de zinc, un oxyde d'aluminium ou un mélange de ces oxydes ;
- un spinelle de cobalt/fer/chrome ou un spinelle de cobalt/aluminium ;
- le procédé comprend une étape de préparation des poudres au cours de laquelle les poudres sont mélangées, homogénéisées ou broyées dans une solution d'eau ou d'alcool ;
- les poudres céramiques sont atomisées à la suite de l'étape de préparation des poudres ;
- les poudres sont déposées dans le moule par un système de dépôt sélectif de poudres pour former plusieurs couches, chaque couche déposée comprenant plusieurs poudres ;
- un tramage est mis en place dans le moule avant l'étape de remplissage du moule ;
- l'étape de frittage est effectué sous vide ou sous atmosphère inerte ou réactive.

L'invention concerne également un composant en céramique monobloc présentant aspect multicolore.

Le composant selon l'invention comprend plusieurs matières céramiques distinctes se différenciant par leur composition et/ou couleur, de manière plus générale par leur aspect esthétique. Selon l'invention, le composant décoré est multicolore et monobloc.

### BREVE DESCRIPTION DES FIGURES

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue schématique du procédé de fabrication selon l'invention.
- les figures 2a à 2c illustrent respectivement des exemples de composants en céramiques multicolores obtenus par le procédé de fabrication selon l'invention.

### DESCRIPTION DETAILLEE

La présente invention se rapporte à un composant en céramique tel qu'un composant d'habillage en horlogerie ou en bijouterie, ou encore un composant horloger présentant dans sa masse une multitude de couleur.

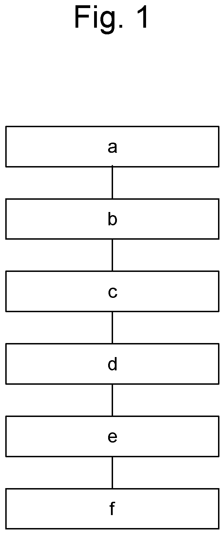

Le procédé selon l'invention est illustré schématiquement par la figure 1. Le procédé se caractérise par un assemblage, tel qu'une juxtaposition et/ou un empilement, de différentes poudres « brutes », suivi d'une étape de frittage de l'ensemble des poudres.

Dans la présente description, on entend par poudre « brute », une poudre qui ne comprend pas de liant polymériques.

Le composant selon l'invention est en céramique. Il peut, à titre d'exemple, s'agir d'une céramique à base d'un oxyde de zirconium, d'aluminium, d'un nitrure de titane, de silicium ou encore d'un carbure tel qu'un carbure de titane ou un carbure de tungstène ou encore d'un mélange de ces céramiques.

Plus généralement, par céramique on entend une base de céramique avec un stabilisant, un élément adjonction ou d'aide frittage et optionnellement un pigment. Par exemple, pour une base oxyde telle que ZrO2 on peut y ajouter du Y2O3 comme stabilisant, de l'Al2O3 comme élément adjonction et du Fe2O3 comme pigment.

Au moins une des poudres céramiques comprend au moins un pigment colorant la matière. Le pigment est un oxyde métallique, un spinelle, un perovskite ou encore un sulfure de cérium, le pigment étant choisi selon la couleur souhaitée. A titre exemple et non limitatif, on peut citer l'oxyde de chrome, l'oxyde de cobalt, l'oxyde de fer, l'oxyde de titane, l'oxyde de manganèse, l'oxyde de zinc, l'oxyde de molybdène, l'oxyde de cérium, l'oxyde de vanadium, l'oxyde d'aluminium ou un mélange de ces oxydes tels que, par exemple, un oxyde de fer/chrome. A titre d'exemple, pour une couleur bleue le pigment peut être un oxyde de cobalt, pour une couleur verte le pigment peut être un oxyde de chrome, pour une couleur brune le pigment peut être un oxyde de fer.

Le composant selon l'invention peut également être un composant décoratif tel qu'un élément constitutif de montres, bijoux, bracelets, etc. Dans le domaine horloger, ce composant peut être un composant d'habillage tel qu'une carrure, un fond, un médaillon, une lunette, un insert de lunette, un poussoir, une couronne, un maillon de bracelet, un fermoir, une boucle, un cadran, une aiguille, un index de cadran, une platine un pont etc. Il peut également s'agir d'un composant du mouvement tel qu'une masse oscillante, une platine, etc. Toujours à titre d'exemple, il pourrait s'agir d'un sigle sur une couronne de montre ou même d'un index sur une lunette.

Le composant est réalisé par la mise en place de différentes poudres dans un moule puis d'un frittage flash ou SPS (Spark Plasma Sintering) pour former un composant en céramique présentant un aspect multicolore.

Le procédé de fabrication comprend les étapes suivantes en référence à la figure 1 :
- préparer plusieurs poudres céramique ou cermets, les poudres céramiques ou cermets se distinguant entre elles par leurs composition et/ou couleurs, les poudres comportant uniquement des carbures, des nitrures, des oxydes ou un mélange de ces éléments ;
- mise à disposition d'un moule agencé pour recevoir les poudres céramiques ;
- remplir le moule avec les poudres céramique en fonction du motif et des couleurs souhaitées, la hauteur des matières mélangées déposées ne dépassant pas la hauteur du moule ;
- effectuer un frittage de type flash ou SPS ;
- démouler le composant en céramique obtenu ;
- effectuer une finition du composant multicolore 1 en céramique.

Optionnellement, on peut effectuer, après l'étape de démoulage, un recuit entre 550 et 1100°C, et entre 30 minutes et 8 heures par palier sous air afin d'éliminer le graphite éventuellement couvrant l'ébauche.

Il est possible d'empiler ou juxtaposer plusieurs couches de matières céramiques mélangées pour former une disposition particulière de couleurs visible depuis les côtés du composant.

Selon un mode de réalisation de l'invention, un tramage ou un chablon est mis en place dans le moule avant l'étape de remplissage du moule. Le tramage ou le chablon permet de compartimenter le moule et créer des motifs lors du remplissage qui persisteront après le frittage, le tramage ou le chablon étant retiré avant l'étape de frittage.

Selon un autre mode de réalisation, les poudres sont déposées dans le moule par un système de dépôt sélectif de poudres pour former plusieurs couches, chaque couche déposée comprenant plusieurs poudres.

La poudre céramique est uniquement composée de carbures, nitrures, oxydes ou un mélange de ces éléments, et ne comprend aucun liant polymérique.

Lors de l'étape de préparation des poudres, les poudres sont mélangées, homogénéisées ou broyées dans une solution d'eau ou d'alcool. L'homogénéisation (ou broyage) est généralement effectuée via un attriteur ou un broyeur à billes. Une solution d'eau sera préférentiellement utilisée dans le cas où la poudre de céramique comprend des pigments d'oxydes métalliques et une solution d'alcool sera utilisée dans le cas de cermets.

A la suite de l'homogénéisation, les poudres sont atomisées ou séchées. L'atomisation permet de former des sphères de particules avec les différents composants de la poudre céramique et d'obtenir une poudre très homogène.

Le procédé comporte une étape d) de frittage flash (ou SPS) de l'assemblage des poudres pour conduire à un composant en céramique multicolore, correspondant à la pièce finale. Les conditions de températures et de pression peuvent être adaptées en fonction de la nature des poudres et/ou des propriétés finales attendues du composant 1.

Selon un mode de réalisation, l'étape de frittage s'effectue à une température comprise entre 600°C et 1800 °C, et sous vide.

L'étape de frittage comporte en outre une pression mécanique comprise entre 5 N/mm2 et 250 N/mm2. La pression mécanique peut être constante ou bien comporter des variations contrôlées telles que différents seuils ou des rampes de valeurs croissantes ou décroissantes.

Le cycle complet de l'étape de frittage est effectué dans un laps de temps compris entre 10 minutes à 180 minutes. On entend par cycle de frittage la montée en température, le maintien en température, et abaissement de la température.

La température est généralement augmentée jusqu'à la température de frittage à atteindre à raison de 50°C à 500°C par minute.

Une fois le frittage terminé, l'étape e) consiste à démouler le composant multicolore obtenu, les couleurs apparaissant directement suite au frittage.

Optionnellement, l'étape de démoulage est suivie par un traitement thermique type recuit entre 550 et 1100°C, et entre 30 minutes et 8 heures par palier sous air ou gaz réactif.

Selon les besoins de l'homme du métier, le composant peut être usiné pour rectifier les dimensions après le frittage.

Après l'éventuelle mise aux dimensions, le procédé de fabrication comporte une étape f) de finition du composant. L'étape de finition peut impliquer un ou plusieurs procédés tels que le satinage, le polissage, le guillochage, la côte de Genève, le perlage, le martelage, la matification, ou tout autre procédé connu de l'homme du métier.

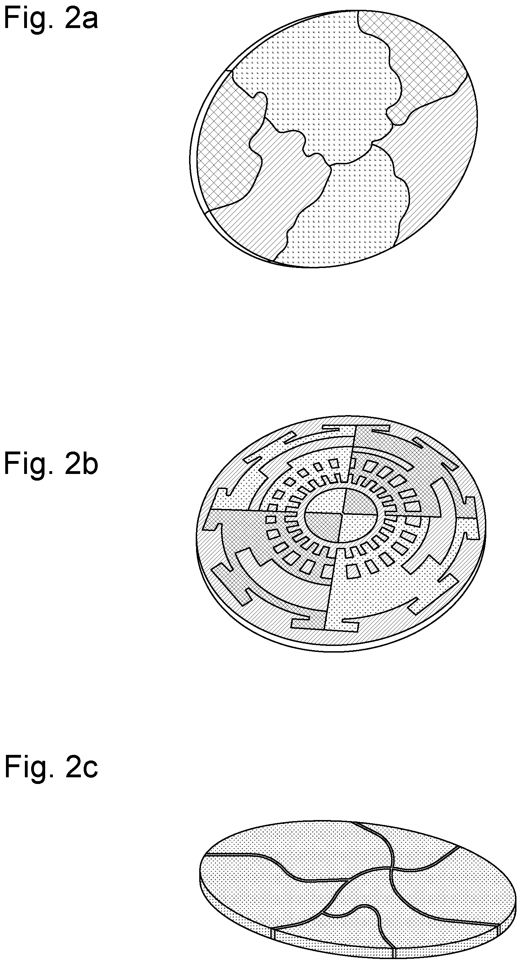

Typiquement, un cadran 1 selon les figures 2a à 2c est obtenu via le procédé selon l'invention, le cadran présentant un aspect multicolore. Bien évidemment, d'autres composants horlogers multicolores peuvent être obtenus via le procédé selon l'invention, tel qu'un composant horloger d'habillage ou un composant du mouvement. Ainsi, une carrure, un fond, un médaillon, une lunette, un insert de lunette, un poussoir, une couronne, un maillon de bracelet, une boucle, un cadran, une aiguille, un index de cadran, une masse oscillante, un pont ou encore une platine peuvent être obtenus au moyen du procédé selon l'invention.

## Revendications

1. Procédé de fabrication d'un composant en céramique monobloc, multicolore, ledit procédé comprenant les étapes suivantes :
- préparer plusieurs poudres céramiques ou cermets, les poudres céramiques ou cermets se distinguant entre elles par leur composition et /ou leur couleur, les poudres comportant uniquement des éléments céramiques, des carbures, des nitrures, des oxydes ou un mélange de ces éléments ;
- mettre à disposition d'un moule ;
- déposer les poudres dans le moule ;
- effectuer un frittage de type flash ou SPS, opéré à une température de frittage comprise entre 600°C et 1800°C et une pression de frittage comprise entre 5N/mm2 et 250N/mm2, pendant un temps de cycle complet compris entre 10 min et 180 min, de sorte à former un composant en céramique multicolore ;
- démouler le composant multicolore obtenu ;
- effectuer une finition du composant multicolore (1) en céramique.

2. Procédé de fabrication selon la revendication 1, **caractérisé en ce que** l'étape de démoulage est suivie d'un traitement thermique type recuit entre 550 et 1100°C, et entre 30 minutes et 8 heures par palier sous air ou gaz réactif.

3. Procédé de fabrication selon la revendication 1, **caractérisé en ce que** les poudres céramiques ou cermets sont choisies parmi : une poudre à base d'un oxyde de zirconium, d'un oxyde d'aluminium, d'un nitrure de titane, d'un nitrure de silicium, d'un carbure de titane, d'un carbure de chrome, d'un carbure de tungstène ou d'un mélange d'au moins deux de ces poudres.

4. Procédé de fabrication selon la revendication 1 ou 2, **caractérisé en ce qu'**au moins une ou plusieurs poudres céramiques comprennent un ou plusieurs pigments distincts donnant une couleur différente à la céramique.

5. Procédé selon l'une des revendications précédentes, **caractérisé en ce que** le pigment est un oxyde métallique, perovskite ou un spinelle.

6. Procédé selon la revendication 4, **caractérisé en ce que** le pigment est choisi parmi un oxyde de chrome, un oxyde de cobalt, un oxyde de fer, un oxyde de titane, un oxyde de manganèse, un oxyde de molybdène, un oxyde de cérium, un oxyde de vanadium, un oxyde de zinc, un oxyde d'aluminium ou un mélange de ces oxydes.

7. Procédé selon la revendication 4, **caractérisé en ce que** le pigment est un spinelle de cobalt/fer/chrome ou un spinelle de cobalt/aluminium.

8. Procédé selon la revendication 4, **caractérisé en ce que** le pigment est un sulfure de cérium.

9. Procédé selon l'une des revendications précédentes, **caractérisé en ce qu'**il comprend une étape de préparation des poudres au cours de laquelle les poudre sont homogénéisées ou broyées dans une solution d'eau ou d'alcool.

10. Procédé selon l'une des revendications précédentes, **caractérisé en ce que** les poudres sont atomisées à la suite de l'étape de préparation des poudres.

11. Procédé selon l'une des revendications précédentes, **caractérisé en ce que** les poudres sont déposées dans le moule par un système de dépôt sélectif de poudres pour former plusieurs couches, chaque couche déposée comprenant plusieurs poudres.

12. Procédé selon l'une des revendications précédentes, **caractérisé en ce qu'**un tramage est mis en place dans le moule avant l'étape de remplissage du moule.

13. Procédé selon l'une des revendications précédentes, **caractérisé en ce que** l'étape de frittage est effectué sous vide ou gaz réactif.

14. Composant en céramique **caractérisé en ce qu'**il présente un aspect multicolore.

15. Composant selon la revendication 13, **caractérisé en ce que** le composant est un composant horloger d'habillage ou du mouvement.

16. Composant selon la revendication 13 ou 14, **caractérisé en ce que** le composant horloger d'habillage ou du mouvement est choisi parmi la liste comprenant une carrure, un fond, une lunette, un insert de lunette, un poussoir, une couronne, un maillon de bracelet, une boucle, un cadran, une aiguille, un index de cadran, une masse oscillante et une platine.
